# EUROPEAN PATENT APPLICATION

(11) **EP 0 532 212 A1**
(43) Date of publication of application: **17.03.1993**
(21) Application number: 92307871.1
(22) Date of filing: 28.08.1992
(51) Int. Cl.: C02F 1/28, B01J 8/00

(54) **Solids removal**

(30) Priority: 29.08.1991 GB 9118616; 30.08.1991 GB 9118568; 21.01.1992 GB 9201210; 21.01.1992 GB 9201168; 04.06.1992 GB 9211808
(71) Applicant: H&G PROCESS CONTRACTING LTD, Croydon, Surrey CR0 9XP (GB)
(72) Inventor: Osborne, David John, London SW20 9EE (GB)

(57) **Abstract**

This invention relates to the removal of particulate solids from beds of the same contained in eg a vessel, tank, open pond, filter, or adsorber. In particular but not exclusively it relates to the removal of granular activated charcoal (GAC) from adsorbers used to treat water. It also relates to the removal of sand from sand filters particularly as used in the production of drinking (potable) water. The adsorbers may for example be a vessel or an open concrete structure.

In accordance with the invention the emptying of an at least partly submerged bed of solids from a container is facilitated by the jetting of a liquid from a submerged nozzle onto or into the bed of solids such that the bed moves generally towards the outlet through which it flows to leave the container.

## Description

This invention relates to the removal of particulate solids from beds of the same contained in eg a vessel, tank, open pond, filter, or adsorber. In particular but not exclusively it relates to the removal of granular activated charcoal (GAC) from adsorbers used to treat water. It also relates to the removal of sand from sand filters particularly as used in the production of drinking (potable) water. The adsorbers may for example be a vessel or an open concrete structure.

In accordance with the invention the emptying of an at least partly submerged bed of solids from a container is facilitated by the jetting of a liquid from a submerged nozzle onto or into the bed of solids such that the bed moves generally towards the outlet through which it flows to leave the container.

The invention will be described with particular reference to GAC adsorbers used in the treatment of potable water, but it may also be used to assist the emptying of other beds of partly submerged solids.

The removal of GAC from a large (say 40 to 1000 m³) adsorber if removed manually (known art) can be very labour intensive, and can cause considerable damage to the GAC due to mechanical handling and/or being walked upon. Another known method of removing the GAC is to fluidize the bed and withdraw a slurry of GAC in water.

Water-soaked GAC is denser than water but not by a large margin. If the GAC is fluidised, it becomes dispersed in the fluidising water. In this state it can be withdrawn from the adsorber. However, the concentration of GAC in the fluidised bed declines until eventually little GAC is being removed with the water in which it is fluidised. This water, removed with the GAC, is called 'blackwater' and its subsequent storage and treatment is a considerable charge on the cost of removing the GAC. This invention greatly reduces the amount of blackwater removed with the GAC, and significantly reduces the time taken to effect such removal.

In EP-A-0494103 there is disclosed water jets used in a particular GAC adsorber device. We have now found that use of such jets has applicability beyond that described in said application wherein the disclosure was limited to their use in annular, radially partitioned, sloping floor adsorber. A description of features of the present invention and its operation, is set out below followed by preferred embodiments of this invention.

The normal sequence of operation would be to remove as much GAC as is reasonable without using the jets. The GAC bed would preferably be totally submerged. Usually this means removing such an amount of GAC as the bed geometry allows to be removed which is a function of the geometry and the static angle of repose of the GAC.

The underwater water jets are then turned on and impinge upon the preferably static, but may be slightly or intermittently fluidised GAC bed, moving it generally towards an outlet through which it is removed from the adsorber. This outlet may be a pipe set in the floor of the adsorber. Fluidising can be effected by either air and/or liquid.

By the use of such jets, the concentration of GAC in the water being removed with the GAC is maintained at a significantly higher average level than would obtain if the bed was fluidised in the absence of the claimed jets.

The bed is at least partially submerged, preferably 30%, more preferably 80% and most preferably totally under the water.

The power of the jets is not so high as to disperse the GAC throughout the water, but just sufficient to undermine and 'push' it towards and into the outlet through which it leaves the adsorber. The actual shape of the jet, its velocity and momentum have to be determined experimentally on a case by case basis. The space behind the jet is cleared by turbulence caused by the jet itself.

Naturally the jet suitable for moving GAC across say several metres depends upon the type of GAC used, granular size, its 'stickiness' and eg whether or not it has 'scale' (calcium carbonate) deposits.

Of course for different solids, liquids, container shapes or dimensions different nozzles would be required. Preferably the bottom of the adsorber is sloped towards the GAC outlet.

Preferably a number of nozzles are located on a spray bar located close to the side wall of the container and at a level close to the floor of the adsorber such that their combined sprays cover the floor of the adsorber, by virtue of the lateral width of the resulting jet.

The nozzles may be permanently installed in the adsorber or may be lowered into the adsorber when required, or both.

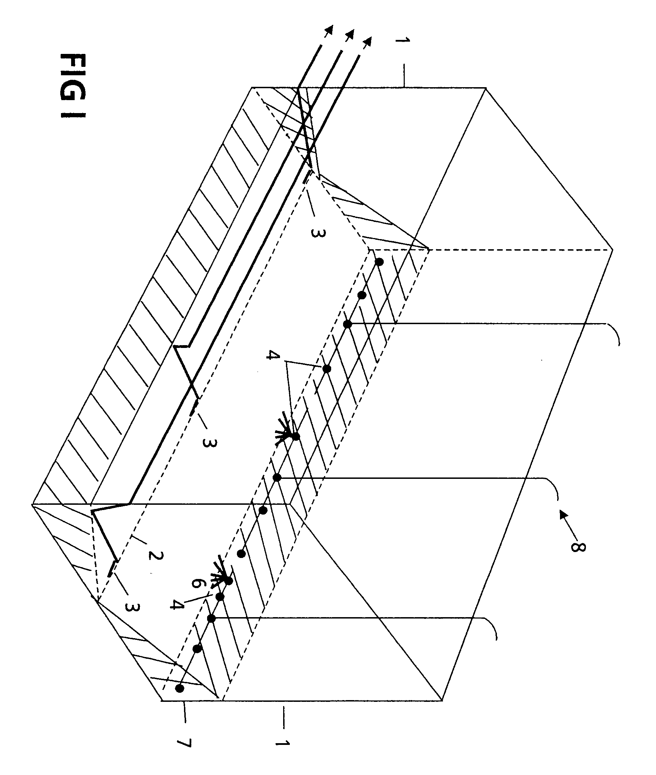

Fig I shows one embodiment of this invention for a water/GAC adsorber. The adsorber shell (1) is made of reinforced concrete. It has a rectangular plan, from each long side of which the bottom of the adsorber slopes down towards a central valley (2). Set in the bottom of the valley are three GAC outlet pipes (3). These lead away to eg the suction of a pump, or an eductor, located outside the adsorber. Shown at the bottom of one of the side walls are nozzles (4) set on, and supplied with water through spray bars (5) which in turn are supplied with water (8) for the submerged generally fan shaped jets (6) to spray onto the residual of bed of carbon - the surface of which has been shaded (7) where it meets the walls of the adsorber. (In Fig 1 the main part of the bed is shown as having been removed from the adsorber by causing it to flow out of the outlet pipes towards which it naturally flows until its submerged static angle of repose is obtained from the outlet pipe). For ease of understanding this invention the normal water inlet and outlet apparatus has not been shown. The outlet pipes could eg comprise Wedgewire (TM) pipes laid on the bottom of the adsorber axially placed perpendicular to the valley and being connected to outlet headers running close to the bottom of the long walls. There being jets between each pair of Wedgewire (TM) pipes to ensure complete GAC removal. The Wedgewire (TM) outlets could be supported slightly off the bottom so as to allow the jets to flush under them.

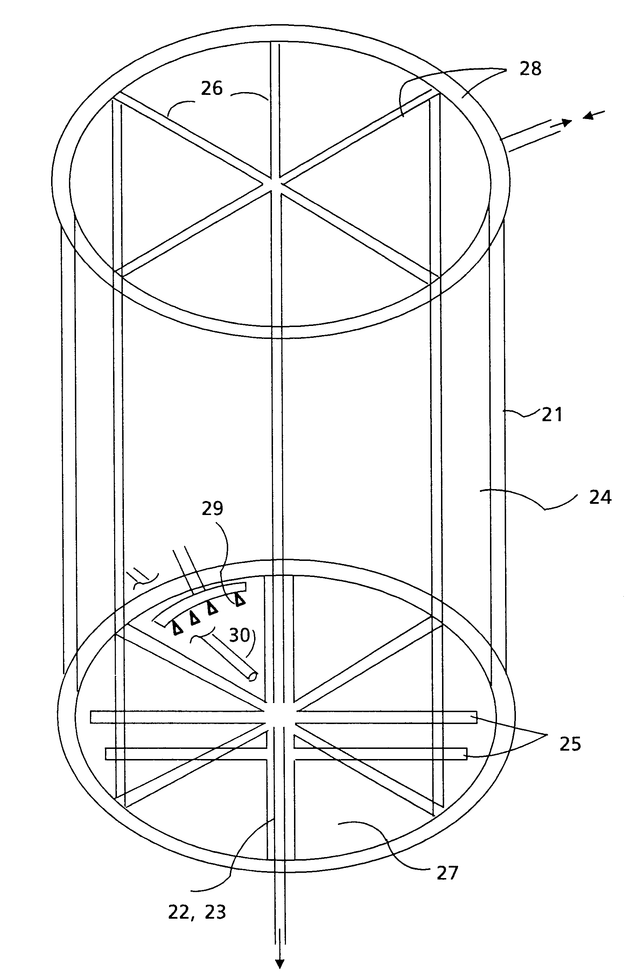

Fig 2 shows features of another embodiment in which the water/GAC adsorber is in the form of a circular tank. (21) It has a flat (or slightly sloping) bottom, across a diagonal (22) of which is located a conventional header (23) for removing the water after it has passed through the bed of GAC, (24) and also for back washing. The header carries laterals (25) in the usual way.

The tank is divided into segments by partitions (26) extending from the floor (27) through the GAC level. Through these segments pass the laterals which are sealed by the use of grommets.

An air scour system of known type is incorporated using a similar header and lateral system which is also sealed where it passes through the partitions.

The header may be encased, atop of which may be located one of the partitions.

Atop of at least some of the partitions are collecting troughs (28) the flow into which may be adjusted by the use of V notch or other weirs. There may also be other troughs and weirs around the top of the circumference of the adsorber.

Around the circumference close to the base are located the underwater water jet nozzles (29) to move the GAC to the centre where it is removed from the adsorber by an outlet pipe (30). There being at least one outlet pipe per segment.

## Claims

**Claim 1** A container other than the adsorber claimed in European Patent Application Number 92300007.9 (EP-A-0494103), for containing a bed of solids at least partly submerged in a liquid, having at least one submerged nozzle for a liquid, the nozzle being orientated generally towards the outlet through which the solids are arranged to leave the container, such that the liquid jet(s) produced from the said at least one nozzle facilitates the removal of the solids from the container.

**Claim 2** A device as claimed in claim 1 wherein the container has a sloping bottom.

**Claim 3** A device as claimed in claim 1 or claim 2 wherein the bed of solids is GAC.

**Claim 4** A device as claimed in claim 1 or claim 2 wherein the bed of solids is sand.

**Claim 5** A device as claimed in any previous claim wherein the container is compartmentalised.

**Claim 6** A device as claimed in any previous claim wherein the at least one nozzle is located relatively close to the side wall of the container.

**Claim 7** A device as claimed in any previous claim wherein the at least one nozzle is located relatively close to the bottom of the container.

**Claim 8** A process for removing solid material from an at least partly submerged bed of solids from a container comprising jetting of a liquid from a submerged nozzle onto or into the bed of solids such that the bed moves generally towards the outlet through which it flows to leave the container, the process being other than the removal of GAC from the adsorber claimed in European Patent Application Number 92300007.9 (EP-A-0494103)

**Claim 9** A process as claimed in claim 8 wherein the bed of solids is GAC.

**Claim 10** A process as claimed in claim 8 wherein the bed of solids is sand.

**Claim 11** A process as claimed in claim 8, 9 or 10 wherein the bed of solids is intermittently fluidised.

**Claim 12** A process as claimed in claims 8, 9 or 10 wherein the bed of solids is slightly fluidised.
